# EUROPEAN PATENT APPLICATION

(11) **EP 4 668 426 A1**
(43) Date of publication of application: **24.12.2025**
(21) Application number: 24216110.7
(22) Date of filing: 28.11.2024
(51) Int. Cl.: H01M 50/15, H01M 50/176, H01M 50/553, H01M 50/567, H01M 10/0525, H01M 50/55, H01M 50/557, H01M 50/186, H01M 10/04, B21D 39/02, B21D 19/04

(54) **COVER PLATE ASSEMBLY, METHOD FOR MANUFACTURING SAME, AND BATTERY**

(30) Priority: 20.06.2024 CN 202410798447
(71) Applicant: CALB Group Co., Ltd., Changzhou City, Jiangsu Province (CN)
(72) Inventor: WANG, Ke, Changzhou City, Jiangsu Province (CN); XU, Jiuling, Changzhou City,Jiangsu Province (CN)
(74) Representative: Becker, Eberhard

(57) **Abstract**

A cover plate assembly includes a cover plate body (1), a pole (2) and a fixing structure (3), wherein the pole (2) is provided on the cover plate body (1); and the fixing structure (3) is fixed on the cover plate body (1), the fixing structure (3) includes a plurality of hems (31), the plurality of hems (31) are provided at intervals around one same pole (2), and the hems (31) are used for fixing the pole (2), wherein each of the hems (31) includes an outer edge (313) remote from the pole (2), a maximum distance between the outer edges (313) of different hems (31) is D, and a maximum width of the cover plate body (1) is L, wherein D/L is 1-2.

## Description

### BACKGROUND

### Technical Field

The present disclosure relates to the technical field of batteries, and in particular to a cover plate assembly, a method for manufacturing same, and a battery.

### Description of Related Art

In the related art, the cover plate assembly includes a cover plate body and a pole, and the pole is provided on the cover plate body. However, a width of the cover plate body is limited, and it is difficult for the pole to have a large cross-sectional area, resulting in low discharge capacity and heat dissipation efficiency of the pole.

It should be noted that the information disclosed in the above-described background section is only used for enhancing understanding of the background of the present disclosure, and thus may include information that does not constitute prior art known to a person skilled in the art.

### SUMMARY

The present disclosure provides a cover plate assembly, which can improve the technical problems of low discharge capacity and heat dissipation efficiency of the pole.

The cover plate assembly includes:
a cover plate body;
a pole provided on the cover plate body; and
a fixing structure fixed on the cover plate body, wherein the fixing structure includes a plurality of hems, the plurality of hems are provided at intervals around one same pole, and the hems are used for fixing the pole,
wherein the hem comprises an outer edge remote from the pole, a maximum distance between the outer edges of different hems is D, and a maximum width of the cover plate body is L, wherein D/L is 1-2.

According to the present disclosure, the hems for fixing the pole are provided at intervals, the maximum distance D between the outer edges of different hems is not limited by the width of the cover plate body, and the setting can increase the maximum distance D between the outer edges of different hems, so that the pole fixed by the hems can also have a larger size in a length direction of the cover plate body, and the pole with a larger size can have larger discharge capacity and heat dissipation speed.

The present disclosure further provides a method for manufacturing a cover plate assembly, including:
providing a cover plate semi-finished product, wherein the cover plate semi-finished product includes a cover plate body, a plurality of vertical walls, and a pole, the pole is provided on the cover plate body, and the plurality of vertical walls are fixed on the cover plate body and are provided at intervals around the pole;
performing a circular motion by using a roller assembly to cause a roller of the roller assembly to press and bend the vertical wall toward one side of the pole, wherein a pressed and bent vertical wall forms a hem, and the hem is used to fix the pole on the cover plate body; and
the roller obliquely contacting the vertical wall, and the roller gradually moving toward a central axis of the pole.

The method for manufacturing a cover plate assembly provided by the present disclosure utilizes the roller assembly to perform a circular motion, and the roller assembly to perform the circular motion is easy to realize and has a simple structure. In addition, the manufacturing method can also realize rapid hem forming.

The present disclosure further provides a method for manufacturing a cover plate assembly, including:
providing a cover plate semi-finished product, wherein the cover plate semi-finished product includes a cover plate body, a plurality of vertical walls, and a pole, the pole is provided on the cover plate body, and the plurality of vertical walls are fixed on the cover plate body and are provided at intervals around the pole;
using a plurality of roller assemblies to press and bend corresponding vertical walls toward one side of the pole respectively, wherein the vertical walls and the roller assemblies are provided in one-to-one correspondence, a pressed and bent vertical wall forms a hem, and the hem is used to fix the pole on the cover plate body,
wherein the using a plurality of roller assemblies to press and bend corresponding vertical walls toward one side of the pole respectively includes:
   performing a reciprocating motion by using the plurality of roller assemblies, such that rollers of the roller assemblies press and bend corresponding vertical walls toward one side of the pole; and
   the roller obliquely contacting the vertical wall, and the roller gradually moving toward a central axis of the pole.

The method for manufacturing a cover plate assembly provided by the present disclosure uses the roller assemblies to perform reciprocating motion. On the one hand, the rollers will not rotate to a gap between the vertical walls, which would cause the rotation of the rollers to be blocked; on the other hand, the roller only generates pressure on the corresponding vertical wall thereof, and the forming efficiency of the hem is high.

The present disclosure further provides a battery, the battery includes the above-described cover plate assembly, and the pole in the battery has a high discharge capacity and heat dissipation speed.

The present disclosure further provides a battery device including the above-mentioned battery.

It is to be understood that both the foregoing general description and the following detailed description are exemplary and explanatory only and are not restrictive of the disclosure.

### BRIEF DESCRIPTION OF THE DRAWINGS

For a better understanding of the present disclosure, reference may be made to the embodiments illustrated in the following drawings. The components in the drawings are not necessarily to scale, and related elements may be omitted to emphasize and clearly illustrate the technical features of the present disclosure. In addition, the associated elements or components may have different arrangements as known in the art. Further, in the drawings, like reference numerals designate identical or similar parts throughout the several views. In the technical solution:
FIG. 1 is a schematic structural diagram of an exemplary embodiment of a cover plate assembly of the present disclosure.
FIG. 2 is a partial enlarged diagram of region A in the cover plate assembly shown in FIG. 1.
FIG. 3 is a top view of the cover plate assembly shown in FIG. 2.
FIG. 4 is an exploded diagram of the cover plate assembly shown in FIG. 2.
FIG. 5 is a cross-sectional diagram of the cover plate assembly shown in FIG. 2 along the dashed line BB.
FIG. 6 is a side view of the cover plate assembly shown in FIG. 5.
FIG. 7 is a schematic structural diagram of another exemplary embodiment of a cover plate assembly of the present disclosure.
FIG. 8 is a schematic structural diagram of an exemplary embodiment of a battery of the present disclosure.
FIG. 9 is a partial schematic structural diagram of another exemplary embodiment of a cover plate assembly of the present disclosure.

### Reference numerals:

1, cover plate body; 2, pole; 21, main body portion; 211, first main body portion; 212, second main body portion; 22, annular protrusion; 3, fixing structure; 31, hem; 311, first hem; 312, second hem; 3131, first end portion; 3132, second end portion; 314, thinning region; 32, arc-shaped connection portion; 4, limiting portion; 41, pole hole; 5, cell body; 61, insulating member; 611, arc-shaped extension portion; 612, linear extension portion; 62, seal; 7, main housing; 613, protrusion.

### DESCRIPTION OF THE EMBODIMENTS

The technical solutions in the exemplary embodiments of the present disclosure will be described clearly and completely in combination with the drawings in the exemplary embodiments of the present disclosure. The exemplary embodiments described herein are for illustrative purposes only and are not intended to limit the scope of the present disclosure, so it is to be understood that various modifications and changes may be made to the exemplary embodiments without departing from the scope of protection of the present disclosure.

In the description of the present disclosure, the terms "first" and "second" are used for descriptive purposes only and are not to be construed as indicating or implying relative importance unless explicitly stated or limited otherwise; the term "plurality" means two or more than two; the term "and/or" includes any and all combinations of one or more of the associated listed items. In particular, reference to "the/aforementioned" object or "an" object is also intended to mean one of a possible plurality of such objects.

Unless otherwise specified or indicated, the terms "connection", "fixation", and the like are to be construed broadly. For example, "connection" may be fixed, or may be detachable, or may be integral, or may be electrical, or may be connected via a signal; and the "connection" may be a direct connection or an indirect connection through an intermediary. The specific meaning of the above-mentioned terms in the present disclosure can be understood by a person skilled in the art according to specific circumstances.

Further, in the description of the present disclosure, it is to be understood that the directional terms "on", "under", "inside" or "outside", and the like, as described in terms of angles shown in the drawings and should not be construed as limiting the exemplary embodiments of the present disclosure. It will also be understood that when an element or feature is referred to as being "on", "under", "inside" or "outside" other one or more elements, it can not only be directly connected "on", "under", "inside" or "outside" the other one or more elements, but also indirectly connected "on", "under", "inside" or "outside" the other one or more elements through intervening elements.

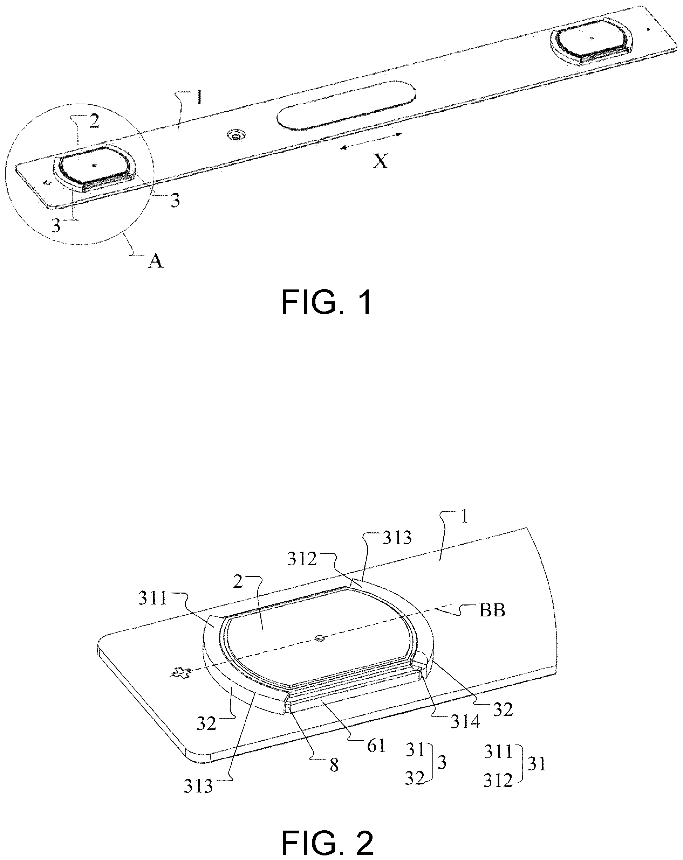

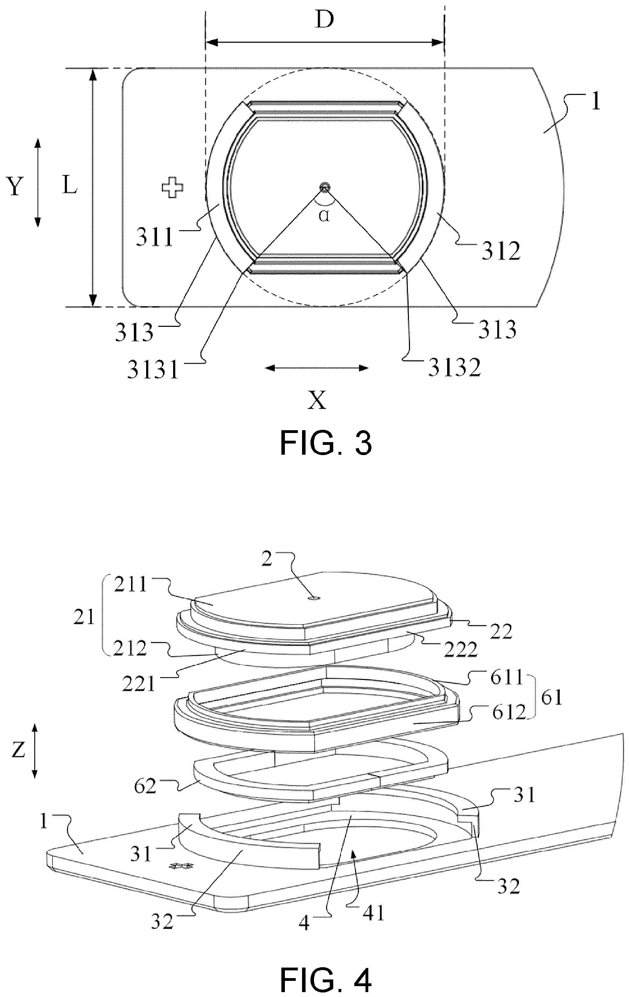

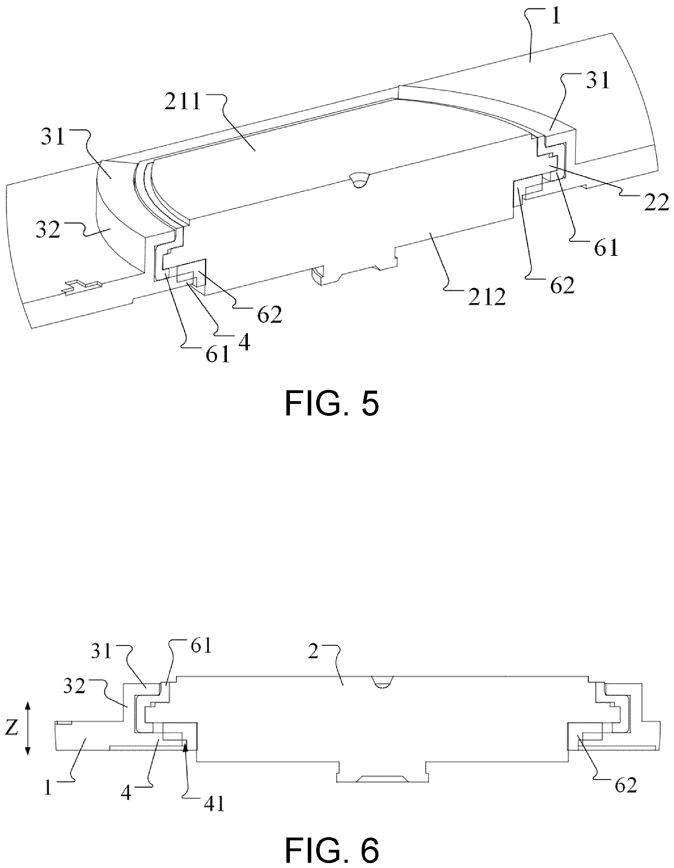

As shown in FIG. 1 to FIG. 6, FIG. 1 is a schematic structural diagram of an exemplary embodiment of a cover plate assembly of the present disclosure, FIG. 2 is a partial enlarged diagram of region A in the cover plate assembly shown in FIG. 1, FIG. 3 is a top view of the cover plate assembly shown in FIG. 2, FIG. 4 is an exploded diagram of the cover plate assembly shown in FIG. 2, FIG. 5 is a cross-sectional diagram of the cover plate assembly shown in FIG. 2 along the dashed line BB, and FIG. 6 is a side view of the cover plate assembly shown in FIG. 5.

The cover plate assembly includes: a cover plate body 1, a pole 2 and a fixing structure 3, wherein the pole 2 is provided on the cover plate body 1; and the fixing structure 3 is fixed on the cover plate body, the fixing structure 3 includes a plurality of hems 31, the plurality of hems 31 are provided at intervals around one same pole 2, and the hems 31 are used for fixing the pole 2, wherein the hem 31 includes an outer edge 313 remote from the pole 2, a maximum distance between the outer edges 313 of different hems is D, and a maximum width of the cover plate body 1 is L, wherein D/L is 1-2.

According to the present exemplary embodiment, the hems for fixing the pole are provided at intervals , the maximum distance D between the outer edges of different hems is not limited by the width of the cover plate body, and the setting can increase the maximum distance D between the outer edges of different hems, so that the pole fixed by the hems can also have a larger size in a length direction of the cover plate body, and the pole with a larger size can have larger discharge capacity and heat dissipation speed.

In the present exemplary embodiment, the battery includes a main housing, the main housing is formed with an opening through which the cell is assembled into an inside of the main housing, and the cover plate body 1 is used to snap the opening. The pole 2 is used to form one electrode output end of the battery. The cover plate body 1 may be located at a top of the battery or at another portion such as a bottom of the battery.

In the present exemplary embodiment, as shown in FIG. 1 to FIG. 6, a size, in a length direction X of the cover plate body 1, of the pole 2 may be larger than a size, in a width direction Y of the cover plate body 1, of the pole 2. In the present exemplary embodiment, a cross section, perpendicular to an axial direction Z of the pole 2, of the pole 2 is of a running track type, and it should be understood that in other exemplary embodiments, the cross section, perpendicular to the axial direction Z of the pole, of the pole may also have other shapes. For example, the cross section, perpendicular to the axial direction Z of the pole, of the pole may be rectangular, oval, polygonal, of an irregular figure, etc. In the present exemplary embodiment, the axial direction Z of the pole is perpendicular to the cover plate body 1.

In the present exemplary embodiment, as shown in FIG. 1 to FIG. 6, the pole 2 may be provided of central symmetry along the central axis thereof, that is, after the pole 2 is rotated 180° along the central axis thereof, the pole coincides with a previous position. This arrangement can greatly improve a space utilization rate on the cover plate body while increasing the size of the pole 2.

In the present exemplary embodiment, D/L may be equal to 1, 1.1, 1.2, 1.3, 1.4, 1.5, 1.6, 1.7, 1.8, 1.9, 2, etc. The larger the D/L, the larger the maximum distance D between the outer edges of the different hems, the larger the size, in the length direction of the cover plate body, of the pole fixed by the hems 31 can be set, and the stronger the discharge capacity and heat dissipation capacity of the pole; at the same time, if the D/L is too large, and the space occupied by the pole in the length direction of the cover plate body is too large, which is not conducive to the design of other structures such as explosion-proof valves and liquid injection holes on the cover plate assembly. In the present exemplary embodiment, D/L is set to a suitable magnitude, which can not only ensure that the pole has strong discharge capacity and heat dissipation capacity, but also facilitate the design of other structures of the cover plate assembly.

In the present exemplary embodiment, the outer edges 313 of the plurality of hems 31 may lie on a circumference of one same circle. It should be understood that in other exemplary embodiments, the outer edges 313 of at least a part of the hems 31 may also be located on circumferences of different circles.

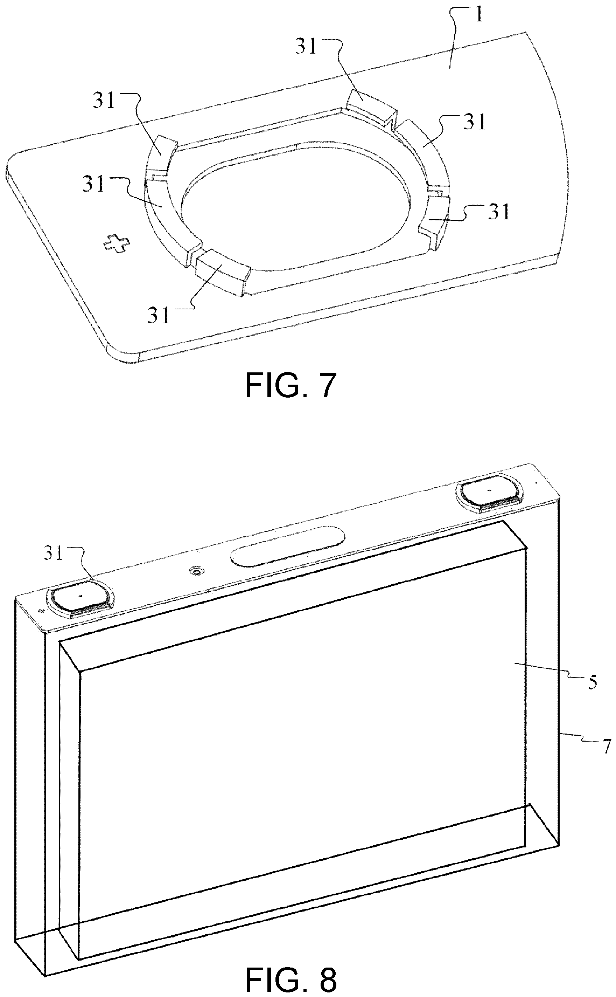

In the present exemplary embodiment, as shown in FIG. 1 to FIG. 6, the plurality of hems 31 may include a first hem 311 and a second hem 312, the first hem 311 and the second hem 312 are oppositely provided in a length direction X of the cover plate body 1, a maximum distance between the outer edge 313 of the first hem 311 and the outer edge 313 of the second hem 312 is D, wherein D/L is 1-1.7. For example, D/L may be equal to 1, 1.1, 1.2, 1.3, 1.4, 1.5, 1.6, 1.7, etc. In the present exemplary embodiment, the fixing structure 3 includes two hems 31, and it should be understood that in other exemplary embodiments, the fixing structure may also include another quantity of hems. For example, FIG. 7 is a schematic structural diagram of another exemplary embodiment of a cover plate assembly of the present disclosure. In the embodiment shown in FIG. 7, the fixing structure includes six hems 31.

In the present exemplary embodiment, as shown in FIG. 1 to FIG. 6, the first hem 311 and the second hem 312 are symmetrically provided in parallel to an axis of symmetry in a width direction Y of the cover plate body 1. The first hem 311 and the second hem 312 symmetrically provided can have a better fixing effect on the pole.

It shall be noted that, when the maximum distance D between the outer edges of the different hems is acquired, the maximum distance between the outer edges of the different hems may be measured, and a maximum value among the plurality of maximum distances is acquired as the maximum distance between the outer edges of the different hems. For example, as shown in FIG. 3, the maximum distance D between the outer edge 313 of the first hem 311 and the outer edge 313 of the second hem 312 is a distance between the outer edge 313 of the first hem 311 and the outer edge 313 of the second hem 312 in the length direction of the cover plate body 1.

In the present exemplary embodiment, the cover plate body 1 includes a length direction X and a width direction Y, a size, in the length direction X of the cover plate body 1, of the cover plate body 1 is larger than a size, in the width direction Y of the cover plate body 1, of the cover plate body 1, at least part of side edges of the cover plate body 1 are parallel to the length direction X, at least part of the side edges of the cover plate body 1 are parallel to the width direction Y, the length direction X and the width direction Y are perpendicular to each other, and side faces, parallel to the length direction X and the width direction Y of the cover plate body, of the cover plate body form side faces of a largest area of the cover plate body. A length of the cover plate body is a size, in the length direction of the cover plate body, of the cover plate body, and a width of the cover plate body is a size, in the width direction of the cover plate body, of the cover plate body. For example, the cover plate body 1 may be of a rectangular shape, a rounded rectangle, or the like. When the cover plate body is rectangular or quasi-rectangular, a maximum width of the cover plate body is the size, in the width direction of the cover plate body, of the cover plate body.

In addition, the cover plate body may be circular, and when the cover plate body is circular, the maximum width of the cover plate body is a diameter of the circular shape.

In the present exemplary embodiment, as shown in FIG. 1 to FIG. 6, the outer edge 313 of the first hem 311 includes a first end portion 3131, and the outer edge 313 of the second hem 312 includes a second end portion 3132 close to the first end portion 3131; an orthographic projection of a central axis of the pole 2 on a plane, in which the cover plate body 1 is located, forms a vertex of a first angle α, an orthographic projection of the first end portion 3131 on the plane, in which the cover plate body 1 is located, is positioned on one brim of the first angle, and an orthographic projection of the second end portion 3132 on the plane, in which the cover plate body 1 is located, is positioned on the other brim of the first angle; and a degree of the first angle α is 60°-150°. For example, the degree of the first angle α may be 60°, 65°, 70°, 75°, 80°, 85°, 90°, 95°, 100°, 105°, 110°, 115°, 120°, 125°, 130°, 135°, 140°, 145°, 150°, etc. If the degree of the first angle α is too large, an extension length of the hem 31 is too short, or the maximum distance between the outer edge 313 of the first hem 311 and the outer edge 313 of the second hem 312 is too large, and the fixing effect by the hem 31 on the pole 2 is poor; if the degree of the first angle α is too small, the distance between the first end portion 3131 and the second end portion 3132 is too small, and the size, in the length direction X of the cover plate body 1, of the pole 2 is relatively small. In the present exemplary embodiment, the first angle α is set to a suitable magnitude, and this arrangement can greatly increase the size, in the length direction X of the cover plate body 1, of the pole 2 on the premise of ensuring a fixing strength by the hems 31 to the pole 2.

It shall be noted that the central axis of the pole 2 is an axis parallel to the axial direction of the pole and located at a centroid of an end face of the pole, and the end face of the pole is perpendicular to the axial direction of the pole.

In the present exemplary embodiment, the cover plate assembly can be applied to a battery, and FIG. 8 is a schematic structural diagram of an exemplary embodiment of the battery of the present disclosure. The battery may include a cell, wherein the cell includes a cell body 5 and a tab. It shall be noted that the plane, in which the cover plate body 1 is located, may be a plane, in which a side face with a largest area on one side, facing away from the cell body 5, of the cover plate body 1 is located.

In the present exemplary embodiment, as shown in FIG. 1 to FIG. 6, the fixing structure 3 may further include: an arc-shaped connection portion 32 connected between the hem 31 and the cover plate body 1.

The degree of the first angle is a°, a radius of curvature of the outer edge 313 is b mm, and a/b is 1-30. For example, a/b may be equal to 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, etc. If a/b is too large, the degree of the first angle α is too large, the radius of curvature of the outer edge 313 is too small, correspondingly, the size, in the width direction Y of the cover plate body 1, of the pole 2 is too small, and the discharge capacity and heat dissipation capacity of the pole are relatively weak; if a/b is too small, the degree of the first angle α is too small, the radius of curvature of the outer edge 313 is too large, a bending degree of the outer edge 313 is small and an extension length is small, and the fixing effect of the fixing structure 3 on the pole 2 is relatively poor. In the present exemplary embodiment, a/b is set to a suitable magnitude, and this arrangement can not only ensure the fixing effect of the fixing structure 3 on the pole 2, but also improve the discharge capacity and heat dissipation capacity of the pole 2.

In the present exemplary embodiment, b may be 5-60. For example, b may be equal to 5, 10, 15, 20, 25, 30, 35, 40, 45, 50, 55, 60, etc.

In the present exemplary embodiment, as shown in FIG. 1 to FIG. 6, an area of a region enclosed by orthographic projections of the outer edges 313 of the plurality of hems 31 on the plane, in which the cover plate body 1 is located, is 100 mm²-1500 mm². For example, the area of the region enclosed by the orthographic projections of the outer edges 313 of the plurality of hems 31 on the plane, in which the cover plate body 1 is located, may be 100 mm², 200 mm², 300 mm², 400 mm², 500 mm², 600 mm², 700 mm², 800 mm², 900 mm², 1000 mm², 1100 mm², 1200 mm², 1300 mm², 1400 mm², 1500 mm², etc. If the area of the region enclosed by the orthographic projections of the outer edges 313 of the plurality of hems 31 on the plane, in which the cover plate body 1 is located, is too small, correspondingly, a cross-sectional area of the pole 2 along a direction perpendicular to the axial direction Z thereof is too small, and the discharge capacity and heat dissipation capacity of the pole 2 are weak; if the area of the region enclosed by the orthographic projections of the outer edges 313 of the plurality of hems 31 on the plane, in which the cover plate body 1 is located, is too large, correspondingly, the pole 2 will occupy a large space of the cover plate body 1, which is not conducive to the design of other structures such as explosion-proof valves and liquid injection holes on the cover plate assembly. In the present exemplary embodiment, the area of the region enclosed by the orthographic projections of the outer edges 313 of the plurality of hems 31 on the plane, in which the cover plate body 1 is located, is set to a suitable magnitude, and this arrangement can not only ensure that the pole has strong discharge capacity and heat dissipation capacity, but also facilitate the design of other structures of the cover plate assembly.

It should be noted that the region enclosed by the orthographic projections of the outer edges 313 of the plurality of hems 31 on the plane, in which the cover plate body 1 is located, can be understood such that: orthographic projections of adjacent ends of the outer edges 313 of adjacent hems on the plane, in which the cover plate body 1 is located, are connected by a straight line, and a region enclosed by the straight line and the outer edges 313 of the hems is the region enclosed by the orthographic projections of the outer edges 313 of the plurality of hems 31 on the plane, in which the cover plate body 1 is located.

In the present exemplary embodiment, as shown in FIG. 1 to FIG. 6, the cover plate assembly may further include: a limiting portion 4 fixed to the cover plate body 1, wherein the limiting portion 4 and the hem 31 are spaced apart in a direction Z perpendicular to the cover plate body 1, an orthographic projection of the limiting portion 4 on a plane, in which the cover plate body 1 is located, and an orthographic projection of the hem 31 on the plane, in which the cover plate body 1 is located, are at least partially overlapped, and at least a part of a structure of the pole 2 is fixed between the limiting portion 4 and the hem 31. That is, the present exemplary embodiment can clamp a part of the structure of the pole 2 between the hem 31 and the limiting portion 4, thereby realizing the fixation of the pole.

In the present exemplary embodiment, as shown in FIG. 1 to FIG. 6, a pole hole 41 is formed on the limiting portion 4, and at least a part of the structure of the pole 2 is located in the pole hole 41. On the one hand, the pole hole 41 can limit the pole 2; on the other hand, at least a part of the structure of the pole 2 extends into the pole hole 41, such that electrical connection between the pole and the cell in the battery housing can be facilitated. In the present exemplary embodiment, the pole hole 41 may be of a running track type, and it should be understood that in other exemplary embodiments, the pole hole 41 may also be circular, oval, polygonal, of an irregular pattern, or the like.

As shown in FIG. 1 to FIG. 6 and FIG. 8, the cover plate assembly is buckled on the main housing 7 of the battery to form a space for accommodating the cell body 5. A ratio of an area of a side face, facing away from the cell body 5, of the pole 2 to an area of the pole hole 41 is 0.8-1.5. For example, the ratio of the area of the side face, facing away from the cell body 5, of the pole 2 to the area of the pole hole 41 may be 0.8, 0.9, 1, 1.1, 1.2, 1.3, 1.4, 1.5, etc. If the ratio of the area of the side face, facing away from the cell body 5, of the pole 2 to the area of the pole hole 41 is too large, the area of the pole hole 41 is too small, a cross-sectional area of a local structure, located in the pole hole, of the pole is too small, and the discharge capacity of the pole is relatively weak; if the ratio of the area of the side face, facing away from the cell body 5, of the pole 2 to the area of the pole hole 41 is too small, the area of the side face, facing away from the cell body 5, of the pole 2 is too small, and the side face, facing away from the cell body 5, of the pole 2 is not easily welded to a structure such as a busbar. In the present exemplary embodiment, the ratio of the area of the side face, facing away from the cell body 5, of the pole 2 to the area of the pole hole 41 is set to a suitable magnitude, and this arrangement can not only improve the discharge capacity of the pole 2, but also facilitate the welding of the pole 2 and the busbar.

In the present exemplary embodiment, the cell may include a positive plate, a negative plate, and a separator located between the positive plate and the negative plate, which are provided in a stacked manner, the positive plate includes a positive current collector and a cathode active material layer located on at least one side of the positive current collector, and the negative plate may include a negative current collector and an anode active material layer located on at least one side of the negative current collector. The tab includes a positive tab and a negative tab. The positive tab is connected to the positive current collector in the positive plate. For example, the positive tab may be formed by cutting out a positive current collector material layer. The negative tab is connected to the negative current collector in the negative plate. For example, the negative tab may be formed by cutting out a negative electrode current collector material layer. A cathode active material of a lithium ion battery may be lithium cobaltate, lithium iron phosphate, ternary lithium, lithium manganate, or the like. An anode active material may be graphite, silicon, or the like. During charging, lithium ions are separated from the cathode active material and move into the anode active material through the electrolyte. The lithium ions are embedded in interlayer voids of a carbon material to complete a charging process of the battery. During discharging, lithium ions are separated from the anode active material and move into the cathode active material through the electrolyte to complete a discharging process of the battery.

In the present exemplary embodiment, as shown in FIG. 1 to FIG. 6, the pole 2 may include: a main body portion 21 and an annular protrusion 22. The main body portion 21 includes a first main body portion 211 and a second main body portion 212, the first main body portion 211 and the second main body portion 212 extend in an axial direction Z of the pole 2, the first main body portion 211 is located on a side, facing away from the cell body 5, of the pole hole 41, and the second main body portion 212 is at least partially located in the pole hole 41. The annular protrusion 22 is provided around a circumferential direction of the main body portion 21, and the annular protrusion 22 is clamped between the limiting portion 4 and the hem 31, that is, the pole 2 can be fixed between the limiting portion 4 and the hem 31 through the annular protrusion 22. A cross-sectional area, perpendicular to the axial direction of the pole 2, of the first main body portion 211 may be larger than a cross-sectional area, perpendicular to the axial direction of the pole 2, of the second main body portion 212. On the one hand, this arrangement may make the area of the pole hole not be too large, and if the area of the pole hole is too large, the strength of the cover plate body is too low; on the other hand, this arrangement can increase the cross-sectional area of the first main body portion 211, thereby increasing the discharge capacity of the pole 2, and in addition, this arrangement can facilitate welding of the first main body portion 211 and an external structure such as a busbar.

In the present exemplary embodiment, as shown in FIG. 1 to FIG. 6, the annular protrusion 22 is provided around the first main body portion 211, and it should be understood that in other exemplary embodiments, the annular protrusion 22 may also be provided around the second main body portion 212.

In the present exemplary embodiment, an area of a side face, facing away from the cell body 5, of the pole 2 is an area of a side face, facing away from the second main body portion 212, of the first main body portion 211.

In the present exemplary embodiment, as shown in FIG. 1 to FIG. 6 and FIG. 8, the hem 31 may be located on a side, facing away from the cell body 5, of the limiting portion 4, that is, the hem 31 is folded and riveted to the pole 2 outside the battery housing. It should be understood that in other exemplary embodiments, the hem 31 may also be located on a side, facing the cell body 5, of the limiting portion 4, that is, the hem 31 is folded and riveted to the pole 2 inside the battery housing.

In the present exemplary embodiment, as shown in FIG. 1 to FIG. 6, the cover plate assembly may further include: an insulating member 61 provided on an outer periphery of the pole 2, wherein at least a part of a structure of the insulating member 61 is located between the fixing structure 3 and the limiting portion 4, and the fixing structure 3 and the limiting portion 4 fix the pole 2 by means of the insulating member 61. The insulating member 61 may be provided such that the pole 2 is insulated from the limiting portion 4 and the fixing structure 3. The insulating member 61 may be a plastic member. It should be understood that in other exemplary embodiments, the insulating member 61 may also be a material such as rubber, mica, ceramic, or the like.

In the present exemplary embodiment, as shown in FIG. 1 to FIG. 6, the insulating member 61 may include: an arc-shaped extension portion 611 and a linear extension portion 612, wherein the arc-shaped extension portion 611 is at least partially located between the fixing structure 3 and the pole 2, and the fixing structure 3 fixes the pole 2 by means of the insulating member 61; and the linear extension portion 612 is located outside a space between the fixing structure 3 and the pole 2, and the linear extension portion 612 is connected between adjacent ends of two adjacent arc-shaped extension portions 611.

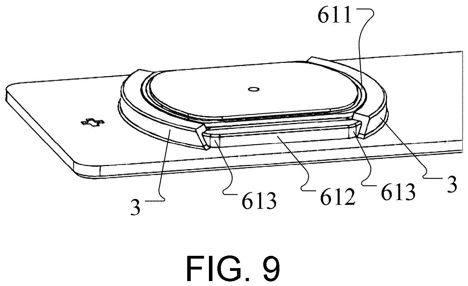

In the present exemplary embodiment, FIG. 9 is a partial schematic structural diagram of another exemplary embodiment of the cover plate assembly of the present disclosure. The insulating member 61 may further include: a protrusion 613 located outside the space between the fixing structure 3 and the pole 2, and connected between the linear extension portion 612 and the arc-shaped extension portion 611; and the fixing structure 3 is limited between two protrusions 613. This arrangement prevents the insulating member 61 from rotating in a circumferential direction of the pole 2. It shall be noted that both ends of the fixing structure 3 may be directly pressed on the protrusion 613, and both ends of the fixing structure 3 may have a slight gap with the protrusion 613.

In the present exemplary embodiment, as shown in FIG. 1 to FIG. 6, the hem 31 extends around a circumferential direction of the pole 2, the circumferential direction of the pole 2 is perpendicular to the axial direction of the pole, the hem 31 includes a thinning region 314 on at least one end in an extension direction thereof, a thickness of the thinning region 314 is smaller than a thickness of other regions of the hem 31, and the thinning region 314 can be curved on a side facing the cover plate body 1. The thinning region 314 can give the insulating member 61 a certain pre-tightening force toward one side of the cover plate body 1, such that the insulating member 61 can be further prevented from rotating in the circumferential direction of the pole 2.

In the present exemplary embodiment, as shown in FIG. 1 to FIG. 6, the cover plate assembly may further include a seal 62 located between the limiting portion 4 and the pole 2, and the seal 62 may prevent substances such as electrolyte solution inside the battery housing from leaking out.

In the present exemplary embodiment, as shown in FIG. 1 to FIG. 6, the annular protrusion 22 includes: two arc-shaped edges 221 and two linear edges 222, wherein the two arc-shaped edges 221 are oppositely provided, the two linear edges 222 are oppositely provided, the linear edges 222 are connected between the two arc-shaped edges 221, the arc-shaped edges 221 may be clamped between the limiting portion 4 and the hem 31, and the linear edges 222 may be located outside a gap between the limiting portion 4 and the hem 31. The two arc-shaped edges 221 may be oppositely provided in the length direction X of the cover plate body, and the two linear edges 222 may be oppositely provided in the width direction Y of the cover plate body.

The exemplary embodiment further provides a method for manufacturing a cover plate assembly, including:
providing a cover plate semi-finished product, wherein the cover plate semi-finished product includes a cover plate body, a plurality of vertical walls, and a pole, the pole is provided on the cover plate body, and the plurality of vertical walls are fixed on the cover plate body and are provided at intervals around the pole; and
performing a circular motion by using a roller assembly to cause a roller of the roller assembly to press and bend the vertical wall toward one side of the pole, wherein a pressed and bent vertical wall forms a hem, and the hem is used to fix the pole on the cover plate body.

In the cover plate assembly manufactured by this manufacturing method, the outer edges 313 of the plurality of hems 31 may lie on a circumference of one same circle.

In the present exemplary embodiment, the roller obliquely contacts the vertical wall, and the roller gradually moves toward a central axis of the pole. The arrangement can prevent the roller from being blocked in a gap between the hems, and can also prevent a structure of the hems from being damaged when the roller penetrates deeply into the gap between the hems.

In the present exemplary embodiment, performing a circular motion by using a roller assembly includes:
performing a plurality of turns of circular motion by using the roller assembly, wherein every time the roller assembly performs one turn of circular motion, the roller moves 0.05 mm-0.5 mm toward the central axis of the pole. For example, every time the roller assembly performs one turn of circular motion, the roller may move 0.05 mm, 0.06 mm, 0.07 mm, 0.08 mm, 0.09 mm, 0.1 mm, 0.15 mm, 0.2 mm, 0.25 mm, 0.3 mm, 0.35 mm, 0.4 mm, 0.45 mm, 0.5 mm, etc., toward the central axis of the pole.

The exemplary embodiment further provides a method for manufacturing a cover plate assembly, including:
providing a cover plate semi-finished product, wherein the cover plate semi-finished product includes a cover plate body, a plurality of vertical walls, and a pole, the pole is provided on the cover plate body, and the plurality of vertical walls are fixed on the cover plate body and are provided at intervals around the pole;
using a plurality of roller assemblies to press and bend corresponding vertical walls toward one side of the pole respectively, wherein the vertical walls and the roller assemblies are provided in one-to-one correspondence, a pressed and bent vertical wall forms a hem, and the hem is used to fix the pole on the cover plate body,
wherein the using a plurality of roller assemblies to press and bend corresponding vertical walls toward one side of the pole respectively includes:
   performing a reciprocating motion by using the plurality of roller assemblies to press and bend corresponding vertical walls toward one side of the pole.

In the present exemplary embodiment, the roller obliquely contacts the vertical wall, and the roller gradually moves toward a central axis of the pole.

In the present exemplary embodiment, the performing a reciprocating motion by using the plurality of roller assemblies includes that:
every time the roller assembly performs one time of reciprocating motion, the roller moves 0.05 mm-0.5 mm toward the central axis of the pole. For example, every time the roller assembly performs one turn of circular motion, the roller may move 0.05 mm, 0.06 mm, 0.07 mm, 0.08 mm, 0.09 mm, 0.1 mm, 0.15 mm, 0.2 mm, 0.25 mm, 0.3 mm, 0.35 mm, 0.4 mm, 0.45 mm, 0.5 mm, etc., toward the central axis of the pole.

The present exemplary embodiment also provides a battery including the aforementioned cover plate assembly.

Note that the battery includes a cell and an electrolyte, and the battery is a minimum unit capable of performing an electrochemical reaction such as charge/discharge. A cell refers to a unit formed by winding or laminating a stack comprising a first pole piece, a partition material, and a second pole piece. When the first pole piece is a positive plate, the second pole piece is a negative plate. The polarities of the first pole piece and the second pole piece may be interchanged. The first pole piece and the second pole piece are coated with an active substance.

In the present exemplary embodiment, the battery may be a lithium ion battery, and it should be understood that in other exemplary embodiments, the battery may also be a cadmium nickel battery, a nickel metal hydride battery, a lithium polymer battery, a sodium ion battery, a solid state battery, or the like.

In other exemplary embodiments, the battery may be a prismatic battery, that is, the battery may be a quadrangular prism battery, and the quadrangular prism battery mainly refers to a contour of a prism shape, but it is not strictly limited whether each side of the prism is necessarily a straight line in a strict sense, and the corner between the edges is not necessarily a right angle, but may be an arc transition.

The battery can be a laminated battery, while the laminated battery is not only convenient to assemble, but also can be processed to obtain a battery with a longer length. Specifically, the cell is a laminated cell, and the cell has first pole pieces stacked on each other, second pole pieces electrically opposite to the first pole piece, and separator pieces provided between the first pole pieces and the second pole piece, such that a plurality of pairs of the first pole pieces and the second pole pieces are stacked to form the laminated cell.

Alternatively, the battery may be a wound type battery, that is, a first pole piece, a second pole piece electrically opposite to the first pole piece, and a separator piece provided between the first pole piece and the second pole piece are wound to obtain a wound cell.

The present exemplary embodiment also provides a battery device, which is a battery module or a battery pack.

The battery module includes a plurality of batteries, the batteries may be prismatic batteries, the battery module may further include an end plate and a side plate, and the end plate and the side plate are used for fixing the plurality of batteries. The batteries may be cylindrical batteries, and the cylindrical batteries may be provided on a pallet to form the battery module.

The battery pack includes a plurality of batteries and a case for fixing the plurality of batteries.

Note that the battery pack includes a plurality of batteries, and the plurality of batteries are provided in the case. The plurality of batteries may form a battery module and then be mounted in the case. Alternatively, the plurality of batteries may be provided directly within the case, without grouping the plurality of batteries, and the case may be used to fix the plurality of batteries.

Other embodiments of the present disclosure will be apparent to a person skilled in the art from consideration of contents of the description and practice of the disclosure herein. The present application is intended to cover any variations, uses, or adaptations of the present disclosure following, in general, the principles of the disclosure and including such departures from the present disclosure as come within common knowledge or customary practice in the art to which the disclosure pertains. It is intended that the description and embodiments be considered as exemplary only, with a true scope and spirit of the present disclosure being indicated by the following claims.

The accompanying drawings in the present disclosure only relate to structures related to the present disclosure, and other structures may be designed with reference to ordinary designs. The embodiments and features in the embodiments in the present disclosure can be combined with each other without conflict to obtain new embodiments. A person skilled in the art should understand that modifications or equivalent substitutions can be made to the disclosed technical solution without departing from the spirit and scope of the technical solution of the present disclosure, and should be included in the scope of the claims of the present disclosure.

It should be understood that the present disclosure is not limited to the precise structures described above and shown in the accompanying drawings, and that various modifications and changes may be made without departing from the scope thereof. The scope of the disclosure is only defined by the appended claims.

## Claims

1. A cover plate assembly, **characterized by** comprising:
a cover plate body (1);
a pole (2) provided on the cover plate body (1); and
a fixing structure (3) fixed on the cover plate body (1), wherein the fixing structure (3) comprises a plurality of hems (31), the plurality of hems (31) are provided at intervals around one same pole (2), and the hems (31) are configured for fixing the pole (2),
wherein each of the hems (31) comprises an outer edge (313) remote from the pole (2), a maximum distance between the outer edges (313) of different hems (31) is D, and a maximum width of the cover plate body (1) is L, wherein D/L is 1-2.

2. The cover plate assembly according to claim 1, **characterized in that** the outer edges (313) of the plurality of hems (31) lie on a circumference of one same circle.

3. The cover plate assembly according to claim 1, **characterized in that**, of the plurality of hems (31), the outer edges (313) of at least a part of the hems (31) lie on circumferences of different circles.

4. The cover plate assembly according to any one of claims 1-3, **characterized in that** the plurality of hems (31) comprise a first hem (311) and a second hem (312), the first hem (311) and the second hem (312) are oppositely provided in a length direction (X) of the cover plate body (1), a maximum distance between the outer edge (313) of the first hem (311) and the outer edge (313) of the second hem (312) is D, wherein D/L is 1-1.7.

5. The cover plate assembly according to claim 4, **characterized in that** the first hem (311) and the second hem (312) are symmetrically provided in parallel to an axis of symmetry in a width direction (Y) of the cover plate body (1).

6. The cover plate assembly according to claim 4, **characterized in that** the outer edge (313) of the first hem (311) comprises a first end portion (3131) and the outer edge (313) of the second hem (312) comprises a second end portion (3132) close to the first end portion (3131);
an orthographic projection of a central axis of the pole (2) on a plane, in which the cover plate body (1) is located, forms a vertex of a first angle (α), an orthographic projection of the first end portion (3131) on the plane, in which the cover plate body (1) is located, is positioned on one brim of the first angle (α), and an orthographic projection of the second end portion (3132) on the plane, in which the cover plate body (1) is located, is positioned on the other brim of the first angle (α); and
a degree of the first angle (α) is 60°-150°.

7. The cover plate assembly according to claim 4, **characterized in that** the outer edge (313) of the first hem (311) comprises a first end portion (3131) and the outer edge (313) of the second hem (312) comprises a second end portion (3132) close to the first end portion (3131);
an orthographic projection of a central axis of the pole (2) on a plane, in which the cover plate body (1) is located, forms a vertex of a first angle (α), an orthographic projection of the first end portion (3131) on the plane, in which the cover plate body (1) is located, is positioned on one brim of the first angle (α), and an orthographic projection of the second end portion (3132) on the plane, in which the cover plate body (1) is located, is positioned on the other brim of the first angle (α); and
a degree of the first angle (α) is a°, a radius of curvature of the outer edge (313) is b mm, and 30≥a/b≥1.

8. The cover plate assembly according to any one of claims 1-3, **characterized in that** an area of a region enclosed by orthographic projections of the outer edges (313) of the plurality of hems (31) on the plane, in which the cover plate body (1) is located, is 100 mm²-1500 mm².

9. The cover plate assembly according to any one of claims 1-3, **characterized in that** the cover plate assembly further comprises:
a limiting portion (4) fixed to the cover plate body (1), wherein the limiting portion (4) and the hems (31) are spaced apart in a direction perpendicular to the cover plate body (1), an orthographic projection of the limiting portion (4) on a plane, in which the cover plate body (1) is located, and an orthographic projection of the hems (31) on the plane, in which the cover plate body (1) is located, are at least partially overlapped, and at least a part of a structure of the pole (2) is fixed between the limiting portion (4) and the hems (31);
a pole hole (41) is formed on the limiting portion (4), and at least a part of the structure of the pole (2) is located in the pole hole (41); and
the cover plate assembly is applied to a battery, the battery comprises a cell body (5), and a ratio of an area of a side face, facing away from the cell body (5), of the pole (2) to an area of the pole hole (41) is 0.8-1.5.

10. The cover plate assembly according to any one of claims 1-3, **characterized in that** the cover plate assembly further comprises:
a limiting portion (4) fixed to the cover plate body (1), wherein the limiting portion (4) and the hems (31) are spaced apart in a direction perpendicular to the cover plate body (1), an orthographic projection of the limiting portion (4) on a plane, in which the cover plate body (1) is located, and an orthographic projection of the hems (31) on the plane, in which the cover plate body (1) is located, are at least partially overlapped, and at least a part of a structure of the pole (2) is fixed between the limiting portion (4) and the hems (31),
wherein the pole (2) comprises:
a main body portion (21); and
an annular protrusion (22) provided around a circumferential direction of the main body portion (21), adn the annular protrusion (22) is clamped between the limiting portion (4) and the hems (31).

11. The cover plate assembly according to claim 10, **characterized in that** a pole hole (41) is formed on the limiting portion (4), the cover plate assembly is applied to a battery, and the battery comprises a cell body (5);
the main body portion (21) comprises a first main body portion (211) and a second main body portion (212), the first main body portion (211) and the second main body portion (212) extend in an axial direction of the pole (2), the first main body portion (211) is located on a side, facing away from the cell body (5), of the pole hole (41), and the second main body portion (212) is at least partially located in the pole hole (41); and
a cross-sectional area, perpendicular to the axial direction of the pole (2), of the first main body portion (211) is larger than a cross-sectional area, perpendicular to the axial direction of the pole (2), of the second main body portion (212).

12. The cover plate assembly according to any one of claims 1-3, **characterized in that** the cover plate assembly further comprises:
a limiting portion (4) fixed to the cover plate body (1), wherein the limiting portion (4) and the hems (31) are spaced apart in a direction perpendicular to the cover plate body (1), an orthographic projection of the limiting portion (4) on a plane, in which the cover plate body (1) is located, and an orthographic projection of the hems (31) on the plane, in which the cover plate body (1) is located, are at least partially overlapped, and at least a part of a structure of the pole (2) is fixed between the limiting portion (4) and the hems (31);
wherein the cover plate assembly is applied to a battery, and the battery comprises a cell body (5); and
each of the hems (31) is located on a side, facing away from the cell body (5), of the limiting portion (4), or each of the hems (31) is located on a side, facing the cell body (5), of the limiting portion (4).

13. The cover plate assembly according to any one of claims 1-3, **characterized in that** the cover plate assembly further comprises: an insulating member (61) provided on an outer periphery of the pole (2), wherein the insulating member (61) comprises:
an arc-shaped extension portion (611) located at least partially between the fixing structure (3) and the pole (2), adn the fixing structure (3) fixs the pole (2) by the insulating member (61);
a linear extension portion (612) located outside a space between the fixing structure (3) and the pole (2), and the linear extension portion (612) is connected between adjacent ends of two adjacent arc-shaped extension portions (611); and
a protrusion (613) located outside the space between the fixing structure (3) and the pole (2) and connected between the linear extension portion (612) and the arc-shaped extension portion (611), wherein
the fixing structure (3) is limited between two protrusions (613).

14. The cover plate assembly according to any one of claims 1-3, **characterized in that** the hems (31) extend around a circumferential direction of the pole (2), each of the hems (31) comprises a thinning region (314) on at least one end in an extension direction thereof, a thickness of the thinning region (314) is smaller than a thickness of other regions of the hem (31), and the thinning region (314) is curved on a side facing the cover plate body (1).

15. The cover plate assembly according to any one of claims 1-3, **characterized in that** the pole (2) is provided of central symmetry along a central axis thereof.

16. The cover plate assembly according to claim 10, **characterized in that** the annular protrusion (22) comprises:
two arc-shaped edges (221), wherin the two arc-shaped edges (221) are oppositely provided; and
two linear edges (222), wherein the two linear edges (222) are oppositely provided, and the linear edges (222) are connected between the two arc-shaped edges (221), wherein
the arc-shaped edges (221) are clamped between the limiting portion (4) and the hems (31).

17. The cover plate assembly according to any one of claims 1-3, **characterized in that** a size, in a length direction (X) of the cover plate body (1), of the pole (2) is larger than a size, in a width direction (Y) of the cover plate body (1), of the pole (2).

18. A method for manufacturing a cover plate assembly, **characterized by** comprising:
providing a cover plate semi-finished product, wherein the cover plate semi-finished product comprises a cover plate body (1), a plurality of vertical walls, and a pole (2), the pole (2) is provided on the cover plate body (1), and the plurality of vertical walls are fixed on the cover plate body (1) and are provided at intervals around one same pole (2);
performing a circular motion by using a roller assembly to cause a roller of the roller assembly to press and bend the vertical wall toward one side of the pole (2), wherein a pressed and bent vertical wall forms a hem (31), and the hem (31) is configured to fix the pole (2) on the cover plate body (1); and
the roller obliquely contacting the vertical wall, and the roller gradually moving toward a central axis of the pole (2).

19. The method for manufacturing a cover plate assembly according to claim 18, **characterized in that** the performing a circular motion by using a roller assembly comprises:
performing a plurality of turns of circular motion by using the roller assembly, wherein every time the roller assembly performs one turn of circular motion, the roller moves 0.05 mm-0.5 mm toward the central axis of the pole (2).

20. A method for manufacturing a cover plate assembly, **characterized by** comprising:
providing a cover plate semi-finished product, wherein the cover plate semi-finished product comprises a cover plate body (1), a plurality of vertical walls, and a pole (2), the pole (2) is provided on the cover plate body (1), and the plurality of vertical walls are fixed on the cover plate body (1) and are provided at intervals around one same pole (2);
using a plurality of roller assemblies to press and bend corresponding vertical walls toward one side of the pole (2) respectively, wherein the vertical walls and the roller assemblies are provided in one-to-one correspondence, a pressed and bent vertical wall forms a hem (31), and the hem (31) is configured to fix the pole (2) on the cover plate body (1),
wherein the using a plurality of roller assemblies to press and bend corresponding vertical walls toward one side of the pole (2) respectively comprises:
performing a reciprocating motion by using the plurality of roller assemblies, such that rollers of the roller assemblies press and bend corresponding vertical walls toward one side of the pole (2); and
the roller obliquely contacting the vertical wall, and the roller gradually moving toward a central axis of the pole (2).

21. The method for manufacturing a cover plate assembly according to claim 20, **characterized in that** the performing a reciprocating motion by using the plurality of roller assemblies comprises that:
every time the roller assembly performs one time of reciprocating motion, the roller moves 0.05 mm-0.5 mm toward the central axis of the pole (2).

22. A battery, **characterized by** comprising the cover plate assembly according to any one of claims 1 to 17.
